# EUROPEAN PATENT SPECIFICATION

(11) **EP 3 597 413 B1**
(45) Date of publication and mention of the grant of the patent: **23.08.2023**
(21) Application number: 19176795.3
(22) Date of filing: 27.05.2019
(51) Int. Cl.: B29C 70/38

(54) **METHOD AND SYSTEM FOR TUNING A TOW PLACEMENT SYSTEM**
VERFAHREN UND SYSTEM ZUM ABSTIMMEN EINES SCHLEPPTAUPLATZIERUNGSSYSTEMS
PROCÉDÉ ET SYSTÈME DE RÉGLAGE D'UN SYSTÈME DE POSITIONNEMENT DE REMORQUAGE

(30) Priority: 16.07.2018 US 201816036337; 16.07.2018 US 201816036383; 03.08.2018 NL 2021423
(43) Date of publication of application: 22.01.2020
(60) Divisional application: 23185041.3
(73) Proprietor: The Boeing Company, Arlington, VA 22202 (US)
(72) Inventor: HAGMAN, Thomas J., Chicago, IL Illinois 60606-1596 (US)
(74) Representative: Duxbury, Stephen

(56) References cited:
- US-A1- 2005 240 291

## Description

### FIELD

The present disclosure relates generally to laying up tows to form composite laminates. More particularly, the present disclosure relates to methods and systems for managing tows by verifying and managing the placement of tow ends of the tows based on the timing associated with movement of the tows during the layup process.

### BACKGROUND

Composite objects are used in various types of platforms, including aircraft. A composite object may be formed from a composite laminate. A composite laminate, or composite layup, may be formed with multiple plies. Each ply may be formed by laying up multiple tows. As one example, plies may be grouped into layers. These groups may be referred to as sequences, with each sequence having multiple tows with tow ends. A tow end may be the end portion or end edge of a tow as cut by a layup system, which may be, for example, a numerically controlled automated fiber placement (AFP) machine. These AFP machines typically have one or more material placement heads that are manipulated to layup multiple tows for a composite laminate on a mandrel or similar tool. The composite laminate may take the form of, for example, a prepreg layup.

For example, multiple parallel tows may be laid up on a surface of a tool to form a single ply. Each of these tows may be, for example, a strip of composite tape or composite material. A tow may have a width of, for example, about 2.54 mm (0.1 inches), about 6.62 mm (0.3 inches), about 12.7 mm (0.5 inches), or some other width. In some illustrative examples, the tows may be laid up in bands (or courses) to form a single layer, with each band including one or more tows. Each tow within a band may run the entire length of the band or only a portion of the band. Further, within a layer, some tows may have different lengths or positions such that the ends of the tows are in different positions relative to each other.

During the layup process, it is desirable to verify that the system is laying up the tows within selected tolerances of preselected or expected positions for the tows. One way of verifying tow position is by verifying the placement of tow ends. Some currently available methods for performing tow end verification include manually performing this verification after the layup of each layer (or ply) of the composite laminate. These methods may require more time than desired and may be less accurate than desired. For example, these methods may cause longer interruptions during the layup process than desired. Thus, one or more apparatuses and methods for addressing the above-described issues may be desired.

U.S. Patent Application Publication No. US 2005/0240291 A1 discloses an apparatus and method for performing a high-speed event, such as a cut/add of a tow, in an automated fiber placement process, by initiating the high-speed event prior to a fiber placement head reaching a location along a tool path of the fiber placement head at which it is desired to have the high-speed event completed.

### SUMMARY

In one example embodiment, a method is provided for managing tow end placement. A tow is laid up over a tuning surface. A first position of a first tow end of the tow is measured. A second position of a second tow end of the tow is measured. A first error between the first position of the first tow end and an expected position for the first tow end is computed. A second error between the second position of the second tow end and an expected position for the second tow end is computed. A determination is made as to whether at least one of the first error or the second error is outside of selected tolerances. A start timing offset of a tow placement system is adjusted if the first error is outside of selected tolerances and a stop timing offset of the tow placement system is adjusted if the second error is outside of selected tolerances.

In another example embodiment, a method is provided for managing a laying up of tows. A course of tows is laid up on a tool using a tow placement system. A verification process is performed for the course prior to laying up a next course. The verification process includes identifying a start latency and a stop latency for each tow of the course. A determination is made as to whether a layup of the course is within selected tolerances based on whether the identified start latencies are substantially equal to a start timing offset selected for the tow placement system and whether the identified stop latencies are substantially equal to a stop timing offset selected for the tow placement system. A tuning process is performed on a tuning surface if the layup of the course is not within selected tolerances.

In yet another example embodiment, a method is provided for managing a laying up of tows. A sequence of tows is laid up on a tool using a tow placement system. A verification process is performed for the sequence prior to laying up a next sequence. The verification process includes identifying a start latency and a stop latency for each tow of the sequence. A determination is made as to whether a layup of the sequence is within selected tolerances based on whether the identified start latencies are substantially equal to a start timing offset selected for the tow placement system and whether the identified stop latencies are substantially equal to a stop timing offset selected for the tow placement system.

In still another example embodiment, a system for managing tow placement during a laying up of a composite laminate includes a tow placement system, a measurement system, and a control system. The tow placement system lays up a tow over a tuning surface. A measurement system measures a first position of a first tow end of the tow and a second position of a second tow end of the tow. The control system computes a first error between the first position of the first tow end and an expected position for the first tow end. The control system computes a second error between the second position of the second tow end and an expected position for the second tow end. The control system determines whether at least one of the first error or the second error is outside of selected tolerances. The control system adjusts a start timing offset of a tow placement system if the first error is outside of selected tolerances and a stop timing offset of the tow placement system if the second error is outside of selected tolerances.

The features and functions may be achieved independently in various embodiments of the present disclosure or may be combined in yet other embodiments in which further details may be seen with reference to the following description and drawings.

### BRIEF DESCRIPTION OF THE DRAWINGS

The novel features believed characteristic of the example embodiments are set forth in the appended claims. The example embodiments, however, as well as a preferred mode of use, further objectives and features thereof, will best be understood by reference to the following detailed description of example embodiments when read in conjunction with the accompanying drawings, wherein:
**Figure 1** is an illustration of a composite manufacturing environment in accordance with an example embodiment.
**Figure 2** is an illustration of a portion of the composite manufacturing environment **100** in accordance with an example embodiment.
**Figure 3** is an illustration of a top view of the tuning table from **Figures 1** and **2** in accordance with an example embodiment.
**Figure 4** is an illustration of a top view of a portion of the tuning table with test tows laid up over the tuning table in accordance with an example embodiment.
**Figure 5** is a block diagram of a manufacturing environment in accordance with an example embodiment.
**Figure 6** is a flowchart of a process for managing tow end placement in accordance with an example embodiment.
**Figure 7** is a flowchart of a process for managing tow end placement in accordance with an example embodiment.
**Figure 8** is a flowchart of a tuning process in accordance with an example embodiment.
**Figure 9** is a flowchart of a process for managing tow end placement in accordance with an example embodiment.
**Figure 10** is an illustration of a first stage in a tow tuning process in accordance with an example embodiment.
**Figure 11** is an illustration of a second stage in a tow tuning process in accordance with an example embodiment.
**Figure 12** is an illustration of a third stage in a tow tuning process in accordance with an example embodiment.
**Figure 13** is an illustration of a fourth stage in a tow tuning process in accordance with an example embodiment.
**Figure 14** is an illustration of a fifth stage in a tow tuning process in accordance with an example embodiment.
**Figure 15** is a block diagram of a data processing system in accordance with an example embodiment.
**Figure 16** is an illustration of an aircraft manufacturing and service method in accordance with an illustrative embodiment in accordance with an example embodiment.
**Figure 17** is a block diagram of an aircraft in accordance with an example embodiment.

### DETAILED DESCRIPTION

The example embodiments described below provide methods and systems for managing tow end placement more quickly, efficiently, and accurately. "Tow end placement" refers to the position of an end of a tow in the direction in which the tow is being laid up over a tool or other surface.

The example embodiments described below provide methods and systems for verifying tow end placement in a manner that eliminates the need for imaging and measuring tow end placement based on these images during the layup of a composite laminate. Further, the methods and systems described below reduce the overall time and processing resources needed for verification of tow end placement. The timing associated with movement of the tows is used to ultimately verify and manage the tow end placement.

A tow placement system may layup the plies for a composite laminate by moving tows through one or more tow feed mechanisms and rolling those tows onto a tool, such as a mandrel. These tow feed mechanisms may include mechanical components, pneumatic components, or both. For example, these tow feed mechanisms may include rollers, actuator pistons, piston seals, bearings, pneumatic valves, cutter devices, other types of components, or a combination thereof.

The example embodiments described below take into account that there may be a delay between the time an actuation command to move or stop moving a tow during layup is generated, sent, or received and the time at which the tow actually moves or stops moving, respectively. This delay may be due to any combination of factors including, for example, without limitation, the age of the parts of the tow placement system, wear of these parts over time, movement of one or more of these parts during operation of the tow placement system, and other factors.

In one example embodiment, the delay (e.g., latency or time interval) between a time at which a command is generated or sent to begin movement of a tow for a layup sequence and the time at which the tow actually begins moving during the layup process is used to determine whether the system is operating within selected tolerances (or selected operational parameters). For example, the latency may be expected to be within a selected range (e.g., ± 0.05 seconds, ± 0.005 seconds, etc.) surrounding the timing offset value determined during the tuning process. This verification step may be repeated for each course within a sequence and for each sequence. If the latency drifts away from the expected timing offset, this drift indicates that the tow ends for those tows may not be in their expected position. The latency drifting away from the expected timing offset may indicate that the timing offset needs to be adjusted. This adjustment may be performed in a variety of different ways during the overall layup process for the composite laminate to ensure that tows are desirably placed in later sequences.

Thus, this verification process does not require imaging each layer of tows laid up and analyzing those images automatically and/or manually to determine the positions of tow ends. Further, the verification process does not require a human operator manually determining whether the tow ends are in the correct positions. By eliminating the need for manual and image-based determinations of tow end placement, the overall time needed to verify tow placement via tow end placement is reduced. Further, the overall time needed for the total layup process for the composite laminate may be reduced. Still further, the tow ends may not need to be reworked after each layer because the system may be adjusted as needed throughout the layup process.

The example embodiments therefore provide methods and apparatuses for improving the speed, efficiency, and accuracy with which tows are laid up. For example, a composite laminate for a spar may require about 150 sequences. Using the verification methods and systems described by the various example embodiments may provide time savings of about 5 minutes per sequence. Thus, these verification methods and systems may provide overall time savings of between about 12 and 13 hours per composite laminate.

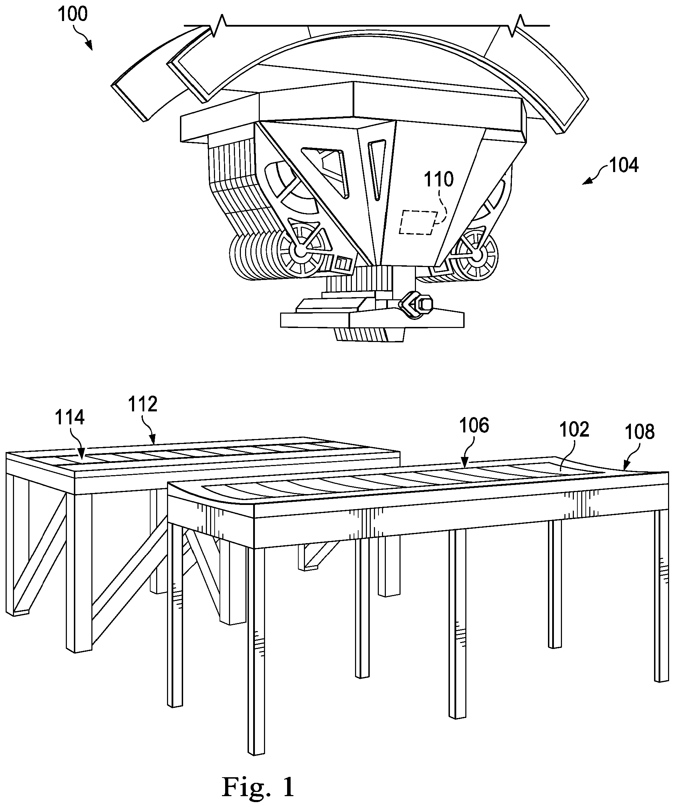

**Figure 1** is an illustration of a composite manufacturing environment in accordance with an example embodiment. Composite manufacturing environment **100** is an example of one type of manufacturing environment in which composite laminate **102** may be formed. Composite laminate **102** may be used to form, for example, an aircraft structure or some other type of composite structure. Tow placement system **104** is an example of one type of system that may be used to layup tows. In this illustrative example, tow placement system **104** is an automated fiber placement (AFP) system. This AFP system is a robotic system.

As depicted, tow placement system **104** is used to lay up tows **106** over tool **108** to form composite laminate **102.** Tows **106** are laid up in multiple layers, or plies. Each layer may be a sequence of tows **106.** The sequence of tows **106** may include one or more courses of tows **106.** Each course, which may also be referred to as a band, may include one or more tows **106.** Typically, tows **106** in any given sequence are substantially parallel (e.g., parallel or near parallel) to each other. Further, tows **106** in any given sequence may have the same lengths or different lengths. For example, one course of tows **106** in a sequence may have tows of a first length, while another course of tows **106** in that same sequence may have tows of a second length that is different from the first length.

In this illustrative example, tows **106** in each sequence are laid up substantially parallel, or in the same orientation as, the other sequences of tows **106.** In other illustrative examples, tows **106** in different sequences may be laid up in different orientations.

During the layup process, some sequences of tows **106** may be full coverage sequences that fully cover a designated area over tool **108.** Other sequences may be partial coverage sequences that only partially overlap the designated area over tool **108.** For example, a first sequence may be a full coverage sequence while the next sequence may be a partial coverage sequence having tows that only partially overlap the tows of the first sequence. In some illustrative examples, a mix of one or more full coverage sequences and one or more partial coverage sequences may be used when composite laminate **102** is desired to have a non-planar contour or complex contour. For example, partial coverage sequences may allow variations in contour, curves, grooves, steps, and other features to be formed more easily.

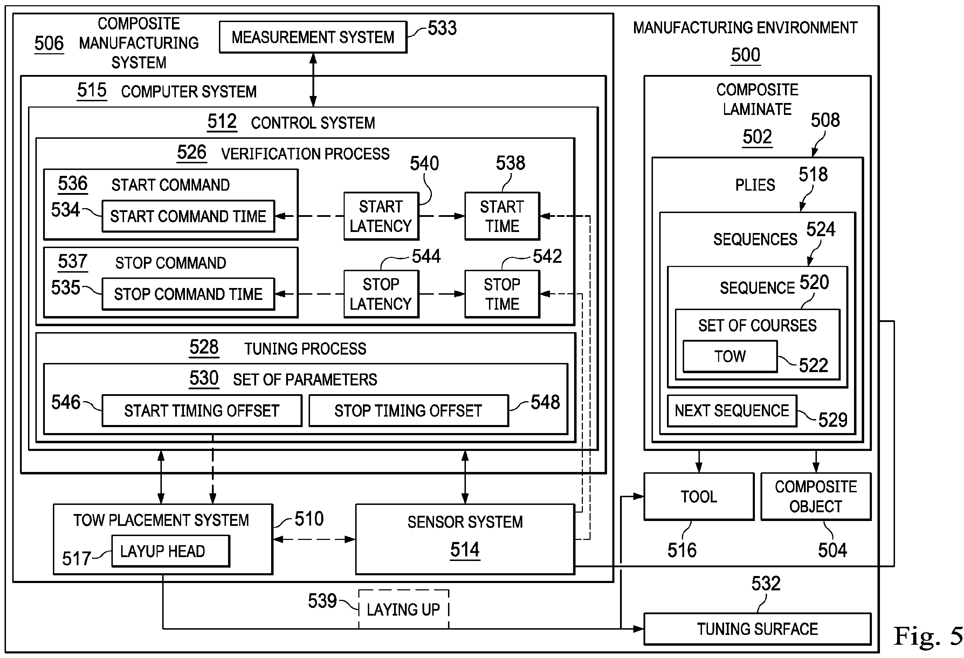

Control system **110** is an example of one implementation for control system **512** in **Figure 5****,** which is described in greater detail below. Control system **110** may be used to verify tow end placement after each sequence of tows **106** is laid up. If control system **110** determines that the placement of tow ends is not satisfactory or is only borderline satisfactory, control system **110** may cause tow placement system **104** to move to tuning table **112** to perform a tuning process. The tuning process includes laying up test tows **114** over tuning table **112.** This tuning process may be a calibration process for calibrating tow placement system **104.** The calibration of tow placement system **104** may be performed periodically at predetermined intervals or random intervals.

Control system **110** may perform the tuning process to adjust the settings of tow placement system **104** to ensure that future tows are desirably placed over tool **108.** Thus, control system **110** may verify tow end placement in real-time or near real-time and perform the tuning process when needed during the layup of composite laminate **102.**

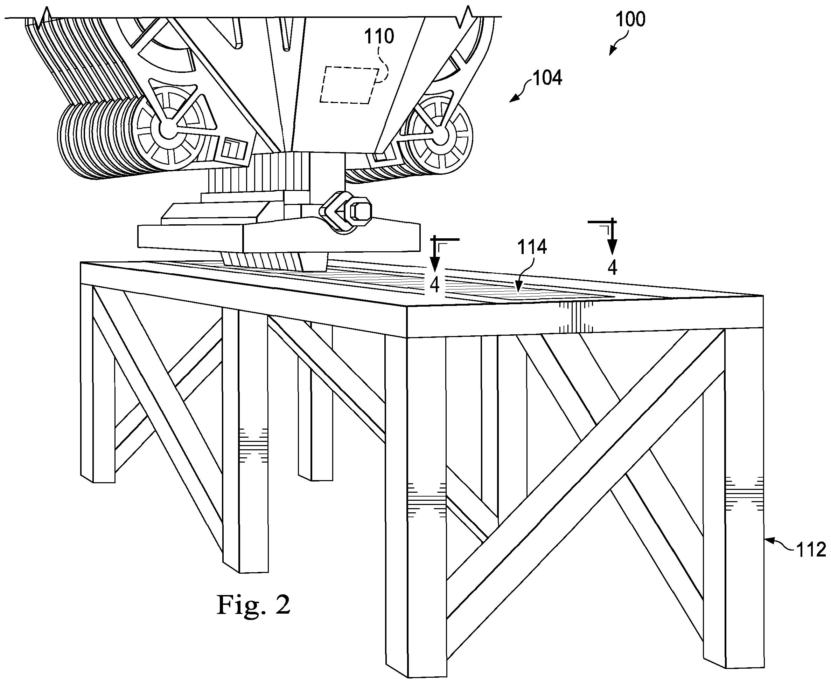

**Figure 2** is an illustration of a portion of a composite manufacturing environment **100** from **Figure 1** in accordance with an example embodiment. In **Figure 2****,** tow placement system **104** is laying up test tows **114** over tuning table **112** so that control system **110** may perform a tuning process.

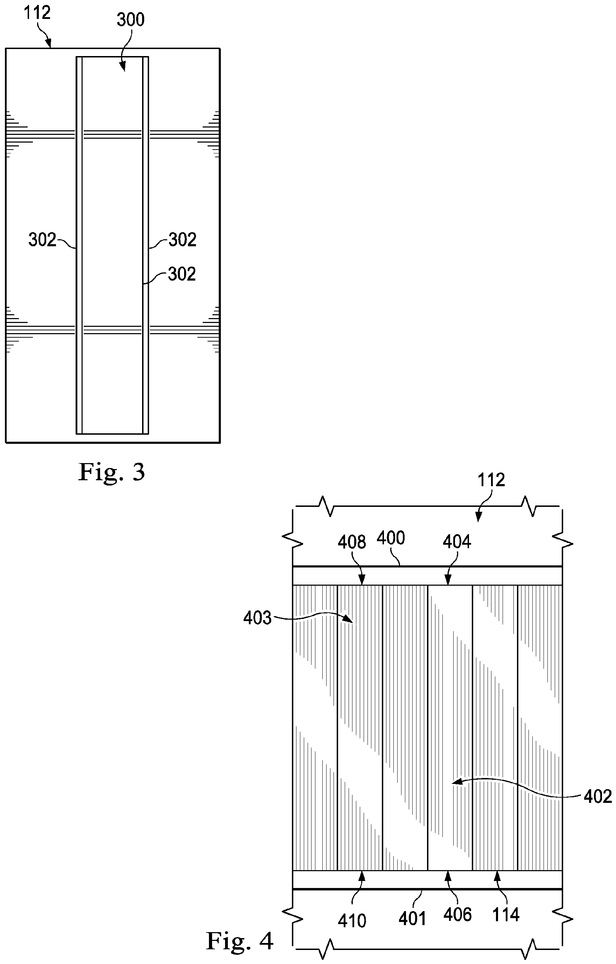

**Figure 3** is an illustration of a top view of tuning table **112** from **Figures 1** and **2** in accordance with an example embodiment. As depicted, tuning table **112** has surface **300.** Notches **302** are present in surface **300.** Notches **302** may be used as guides to determine whether tow ends are being laid up as desired. As one illustrative example, the desired placement of a tow end for any given tow may be about 12.7 mm (0.5 inches) away from a notch.

**Figure 4** is an illustration of a top view of a portion of tuning table **112** with test tows **114** laid up over tuning table **112,** depicted with respect to lines **4-4** in **Figure 2****,** in accordance with an example embodiment. As depicted, test tows **114** have been laid up between notch **400** and notch **401.** Test tows **114** include, for example, tow **402** and tow **403.** Tow **402** has tow end **404** and tow end **406.** Tow end **403** has tow end **408** and tow end **410.**

Control system **110** shown in **Figures 1** and **2** may adjust the settings of tow placement system **104** in **Figure 1** any number of times until test tows **114** have tow ends that are desirably placed relative to notch **400** and notch **401.** Tow **402** may be considered desirably placed when tow end **404** and tow end **406** are each at a selected distance away from notch **400** and notch **401,** respectively. Similarly, tow **403** may be considered desirably placed when tow end **408** and tow end **410** are each at a selected distance away from notch **400** and notch **401,** respectively.

This selected distance may be about 12.7 mm (0.5 inches). More specifically, tow **403** may be considered desirably placed when tow end **408** is within ± 0.254 mm (0.01 inches), ± 0.0254 mm (0.001 inches), ± 1.27 mm (0.05 inches), ± 2.54 mm (0.10 inches) or some other predetermined range of the selected distance of 12.7 mm (0.5 inches). In other illustrative examples, the selected distance may be about 5.08 mm (0.2 inches), 6.35 mm (0.25 inches), 10.16 mm (0.4 inches), 15.24 mm (0.6 inches), 25.4 mm (1 inch), 38.1 (1.5 inches) or some other distance away from the notches.

**Figure 5** is a block diagram of a manufacturing environment in accordance with an example embodiment. Manufacturing environment **500** is an example of one type of manufacturing environment **500** in which composite laminate **502** may be formed. Composite manufacturing environment **100** in **Figures 1** and **2** is an example of one implementation for manufacturing environment **500.** Composite laminate **102** being formed in **Figure 1** is an example of one implementation for composite laminate **502.**

Composite laminate **502** may be used to form composite object **504,** which may take any number of different forms. Composite object **504** may also be referred to as a composite part or composite structure. Composite object **504** may be any object or structure formed out of or fabricated from composite material. In some cases, composite object **504** may be fully formed of composite material. Composite object **504** may take the form of, for example, without limitation, a spar, a beam, a frame, a rib, an intercostal, a stringer, a wing structure, a fuselage structure, a stabilizer structure, a blade, a composite panel, some other composite aircraft structure, or some other type of composite structure.

Composite manufacturing system **506** may be used to manufacture composite laminate **502.** As depicted, composite laminate **502** may be comprised of a plurality of plies **508.** Each ply of plies **508** may be comprised of multiple tows, each of which may be comprised of a composite material.

Composite manufacturing system **506** may include tow placement system **510,** control system **512,** and sensor system **514.** In one illustrative example, tow placement system **510** takes the form of an automated fiber placement system, which may be a computer numerically controlled (CNC) machine. Tow placement system **510** may be controlled by control system **512.** In other words, tow placement system **510** may be controlled using numerically controlled (NC) programming. This programming may be controlled by control system **512.** Control system **512** may be part of or separate from tow placement system **510.** In some cases, a portion of control system **512** may be part of tow placement system **510,** while another portion of control system **512** may be separate from tow placement system **510.**

Control system **512** may be implemented using software, hardware, firmware, or a combination thereof. When software is used, the operations performed by control system **512** may be implemented using, for example, without limitation, program code configured to run on a processor unit. When firmware is used, the operations performed by control system **512** may be implemented using, for example, without limitation, program code and data and stored in persistent memory to run on a processor unit.

When hardware is employed, the hardware may include one or more circuits that operate to perform the operations performed by control system **512.** Depending on the implementation, the hardware may take the form of a circuit system, an integrated circuit, an application specific integrated circuit (ASIC), a programmable logic device, or some other suitable type of hardware device configured to perform any number of operations. A programmable logic device may be configured to perform certain operations. The device may be permanently configured to perform these operations or may be reconfigurable. A programmable logic device may take the form of, for example, without limitation, a programmable logic array, a programmable array logic, a field programmable logic array, a field programmable gate array, or some other type of programmable hardware device.

In one illustrative example, control system **512** is implemented using computer system **515.** Computer system **515** may include a single computer or multiple computers in communication with each other.

In these illustrative examples, tow placement system **510** is controlled by control system **512** to lay up plies **508** over tool **516** to form composite laminate **502.** Tool **516** may also be referred to as a mandrel or a part. Tow placement system **510** may include one or more layup heads, such as layup head **517.** Layup head **517** is capable of laying up multiple, substantially parallel tows at a same time. For example, a single layup head may have between about 5 and 25 tow feed mechanisms for laying up between about 5 and 25 respective tows. In other illustrative examples, a layup head may have only a single tow feed mechanism or up to 40 tow feed mechanisms.

Plies **508** are laid up over tool **516** as sequences **518.** In other words, each of plies **508** may represent a corresponding one of sequences **518** of tows. Each of sequences **518** may include set of courses **520.** As used herein, a "set of" items includes one or more of the items. Thus, set of courses **520** may include one or more courses. Each course in set of courses **520** includes a set of tows (i.e., one or more tows). Tow **522** is an example of a tow in sequence **524** of sequences **518.**

During the layup process, the placement of the tows that make up each of sequences **518** is verified using sensor system **514** and control system **512.** Sensor system **514** is in communication with control system **512.** In some cases, sensor system **514** may also be in communication with tow placement system **510.** In these illustrative examples, sensor system **514** may include one or more sensors.

In one or more illustrative examples, sensor system **514** is attached to or considered part of tow placement system **510.** In other illustrative examples, some portion of sensor system **514** may be positioned relative to tool **516.** In still other illustrative examples, sensor system **514** may be positioned on, near, or otherwise relative to a layup head, such as layup head **517,** of tow placement system **510.** Sensor system **514** may include a movement sensor. For example, sensor system **514** is configured to detect movement of a tow, such as tow **522.** Sensor system **514** may detect when movement of tow **522** begins and when movement of tow **522** stops.

In some illustrative examples, sensor system **514** may include a sensor device for each layup head of tow placement system **510.** For example, sensor system **514** may include a sensor device designated for layup head **517.** In other illustrative examples, sensor system **514** may include a sensor device for each tow feed mechanism in each layup head of tow placement system **510.** Thus, sensor system **514** may be implemented and configured in various ways.

In these illustrative examples, verification process **526** is performed for each of sequences **518.** If the result of verification process **526** is satisfactory, a next sequence of tows is laid up. If the result of verification process **526** is not satisfactory, tuning process **528** is performed prior to beginning the layup of a next sequence **529** of tows.

Tuning process **528** is used to adjust set of parameters **530** for at least one of tow placement system **510** or control system **512.** In some cases, this adjustment may be referred to as "tuning" or "calibrating" tow placement system **510.** In these illustrative examples, tuning process **528** may be performed separately and away from tool **516.** For example, tuning process **528** may be performed over tuning surface **532** by laying up one or more tows and measuring or otherwise determining the positions of the tow ends of these tows. Tuning surface **532** may take the form of a table, a flat plate, or some other type of surface. Tuning table **112** in **Figures 1****,** **2****,** and **3** is an example of one implementation for tuning surface **532.**

Tuning process **528** may be used to calibrate tow placement system **510.** This calibration may be performed periodically at predetermined intervals or random intervals.

The tow end positions may be measured using measurement system **533.** Measurement system **533** may take various forms. In some cases, measurement system **533** may include a camera, a position sensor, a laser, some other type of device, or a combination thereof. Measurement system **533** may be separate from tow placement system **510,** integrated as part of tow placement system **510,** or both. The positions of these tow ends may be used to determine whether set of parameters **530** of at least one of tow placement system **510** or control system **512** needs to be adjusted.

For each sequence, such as sequence **524,** verification process **526** may be performed. Here, verification process **526** is described with respect to a single tow. But the below process may be applicable to an entire course or entire sequence, depending on the implementation. Verification process **526** is used to verify tow end placement. "Tow end placement" or the placement of a tow end of tow **522** may be the position of the tow end with respect to the direction in which tow **522** is being laid up over tool **516.** For example, the placement of the tow end may refer to the position of the tow end on tool **516** along the axis of movement of the roller of tow placement system **510** that lays up tow **522** over tool **516.**

Verification process **526** may include determining start command time **534** at which start command **536** is generated by control system **512,** sent to tow placement system **510,** or received by tow placement system **510.** Start command **536** may be, for example, an actuation command to begin movement and laying up **539** of tow **522.** Further, verification process **527** may include determining stop command time **535** at which stop command **537** is generated by control system **512,** sent to tow placement system **510,** or received by tow placement system **510.** Stop command **537** may be, for example, an actuation command to stop or halt the movement and laying up **539** of tow **522.**

Sensor system **514** detects start time **538** at which movement of tow **522** is initiated for the layup process. Control system **512** determines start latency **540** between start time **538** and start command time **534.** Start latency **540** is the time interval or period between start time **538** and start command time **534.** Control system **512** uses start latency **540** to determine whether set of parameters **530** needs to be adjusted.

Further, sensor system **514** may detect stop time **542** at which movement of tow **522** is stopped or halted. Control system **512** determines stop latency **544** between stop time **542** and stop command time **535.** Stop latency **544** is the time interval or period between stop time **542** and stop command time **535.** Control system **512** uses stop latency **544** to determine whether set of parameters **530** needs to be adjusted.

Set of parameters **530** may include, for example, at least one of start timing offset **546,** stop timing offset **548,** or some other parameter. Start timing offset **546** determines how early start command **536** is generated, sent, or received relative to the desired start time for the movement of a tow **522.** Stop timing offset **548** determines how early stop command **537** is generated, sent, or received relative to the desired stop time for the movement of tow **522.**

If start timing offset **546,** stop timing offset **548,** or both need to be adjusted, tuning process **528** may be used to perform these adjustments. Tuning process **528** is described in greater detail in the figures below.

Thus, verification process **526** and tuning process **528** reduce the overall time needed for inspection of plies **508** during the fabrication of composite laminate **502.** For example, performing verification process **526** may eliminate a need to physically inspect each course of each of sequences **518** or even each of sequences **518.** Further, verification process **526** ensures that tuning process **528** is only performed when tow placement is becoming borderline unsatisfactory, is borderline unsatisfactory, or is unsatisfactory.

The illustration of composite manufacturing system **506** in **Figure 5** is not meant to imply physical or architectural limitations to the manner in which an illustrative embodiment may be implemented. Other components in addition to or in place of the ones illustrated may be used. Some components may be optional. Further, the blocks are presented to illustrate some functional components. One or more of these blocks may be combined, divided, or combined and divided into different blocks when implemented in an illustrative embodiment.

For example, verification process **526** is described above with respect to each of sequences **518.** In other illustrative examples, verification process **526** may be performed for each of courses **520** within each of sequences **518.** As one illustrative example, the start latency for each of courses **520** within a particular sequence **524** may be averaged to determine an overall start latency **540** for sequence **524.** In still other illustrative examples, each of courses **520** may be evaluated to determine whether tuning process **528** needs to be performed before a next course within a same sequence **524.**

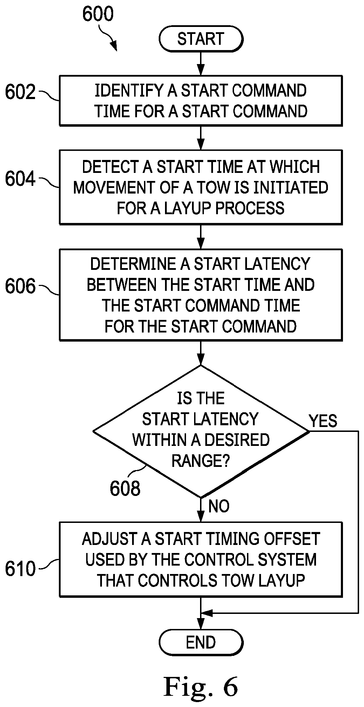

**Figure 6** is flowchart of a process for managing tow end placement in accordance with an example embodiment. Process **600** illustrated in **Figure 6** may be an example of one process included in verification process **526** described in **Figure 5****.** Further, process **600** illustrated in **Figure 6** may be implemented using composite manufacturing system **506** in **Figure 5****.** In particular, process **600** may be performed using sensor system **514** and control system **512** of **Figure 5****.**

Process **600** may begin by identifying a start command time for a start command (operation **602**). In operation **602,** the start command time may be based on when the start command is generated, received, or sent. The start command may be, for example, an actuation command.

Thereafter, a start time at which movement of a tow is initiated for a layup process is detected (operation **604**). Movement of the tow begins in response to stop command. Operation **604** may be performed using, for example, sensor system **514** described in **Figure 5****.** A start latency between the start time and the start command time for the start command is determined (operation **606**). For example, the start latency may be the time interval or period between the start time at which movement of the tow is detected and the start command time at which the start command is received by a layup head of tow placement system **510.**

Next, a determination is made as to whether the start latency is within a desired range (operation **608**). If the start latency is within the desired range, the process terminates. If the start latency is not within the desired range, a start timing offset used by the control system that controls tow layup is adjusted (operation **610**), with the process terminating thereafter.

Operation **610** may be performed in a variety of different ways. In one illustrative example, the start timing offset may be adjusted by setting control system **512** to generate or send the start command earlier or later.

Process **600** may be repeated for each of courses **520** of tows or each of sequences **518** of tows. Further, although process **600** is described below with respect to a single tow, such as tow **522** in **Figure 5****,** process **600** may be similarly applied with respect to an entire course or sequence of tows.

For example, in operation **604,** the start time may be the time at which all tows on the layup heads in tow placement system **510** that are designated for a particular course begin movement. In some cases, the start time may be a mean, median, or other statistical variation of the start times for all the tows in the course. When process **600** is performed for a sequence of tows, such as sequence **524,** the start latency identified in operation **606** may be a mean, median, or other statistical variation of the start latencies for all the courses in the sequence. Further, when process **600** is performed for a course or sequence of tows, adjusting the start timing offset in operation **610** may include adjusting the start timing offsets for each tow feed mechanism of, for example, layup head **517** of tow placement system **510.**

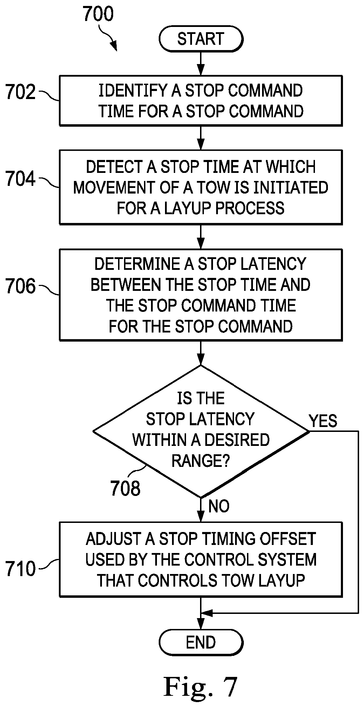

**Figure 7** is flowchart of a process for managing tow end placement in accordance with an example embodiment. Process **700** illustrated in **Figure 7** may be an example of one process included in verification process **526** described in **Figure 5****.** Further, process **700** illustrated in **Figure 7** may be implemented using composite manufacturing system **506** in **Figure 5****.** In particular, process **700** may be performed using sensor system **514** and control system **512** of **Figure 5****.** In some illustrative examples, process **700** may be performed in combination with process **600** as part of verification process **526.**

Process **700** may begin by identifying a stop command time for a stop command (operation **702**). In operation **702,** the stop command time may be based on when the stop command is generated, received, or sent. The stop command may be, for example, an actuation command.

Thereafter, a stop time at which movement of the tow is stopped during a layup process is detected (operation **704**). The movement of the tow is stopped or halted in response to stop command. Operation **704** may be performed using, for example, sensor system **514** described in **Figure** 5. A stop latency between the stop time and the stop command time for the stop command is determined (operation **706**). For example, the stop latency may be the time interval or period between the stop time at which movement of the tow is detected as stopped or halted and the stop command time at which the stop command is received by a layup head of tow placement system **510.**

Next, a determination is made as to whether the stop latency is within a desired range (operation **708**). If the stop latency is within the desired range, the process terminates. If the stop latency is not within the desired range, a stop timing offset used by the control system that controls tow layup is adjusted (operation **710**), with the process terminating thereafter.

Operation **710** may be performed in a variety of different ways. In one illustrative example, the stop timing offset may be adjusted by setting control system **512** to generate or send the stop command earlier or later.

Process **700** may be repeated for each of courses **520** of tows or each of sequences **518** of tows. Further, although process **700** is described below with respect to a single tow, such as tow **522** in **Figure 5****,** process **700** may be similarly applied with respect to an entire course or sequence of tows. For example, in operation **704,** the stop time may be the time at which all tows on the layup heads in tow placement system **510** that are designated for a particular course begin movement. In some cases, the stop time may be a mean, median, or other statistical variation of the stop times for all the tows in the course. When process **700** is performed for a sequence of tows, such as sequence **524,** the stop latency identified in operation **706** may be a mean, median, or other statistical variation of the stop latencies for all the courses in the sequence. Further, when process **700** is performed for a course or sequence of tows, adjusting the stop timing offset in operation **710** may include adjusting the stop timing offsets for each tow feed mechanism of, for example, layup head **517** of tow placement system **510.**

Thus, each of process **600** and process **700** may be examples of a general process for managing tow end placement. A time at which movement of a tow is initiated or stopped during a layup process is detected. A latency between this time and a command time corresponding to a command to begin movement or stop movement of the tow is determined. A determination is made as to whether the latency is within a desired range. A timing offset used by a control system that controls tow layup is adjusted in response to a determination that the latency is not within the desired range.

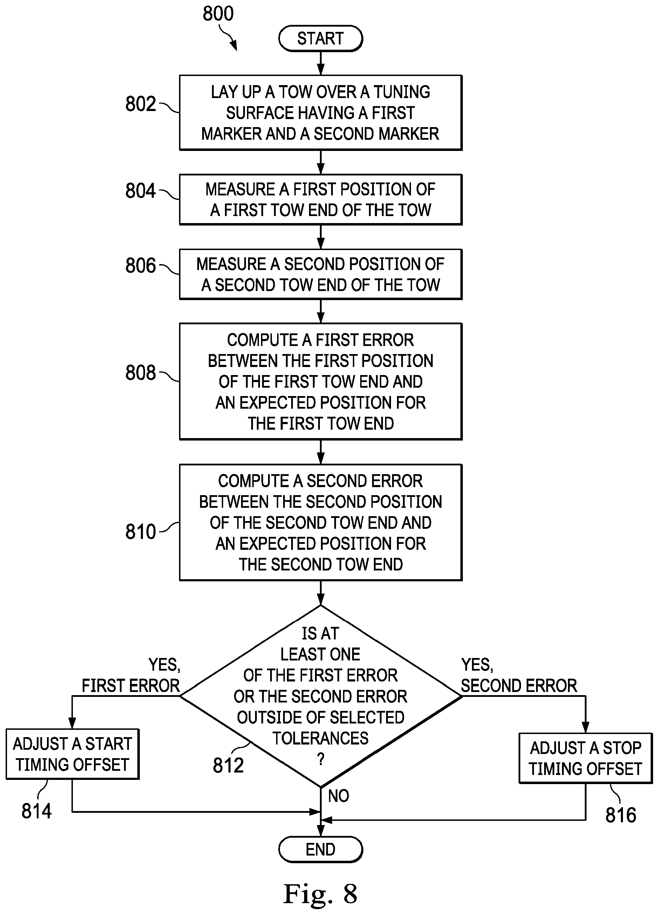

**Figure 8** is flowchart of a tuning process in accordance with an example embodiment. Process **800** illustrated in **Figure 8** may be used to implement tuning process **528** described in **Figure 5****.** Further, process **800** illustrated in **Figure 8** may be implemented using composite manufacturing system **506** in **Figure 5****.** In particular, process **800** may be performed using control system **512** and measurement system **533** of **Figure 5****.**

Process **800** may begin by laying up a tow over a tuning surface having a first marker and a second marker (operation **802**). The tuning surface, which may be tuning surface **532** of **Figure 5****,** may take the form of a flat plate. The first marker and the second marker may be, for example, gage marks, ink marks, taped labels, laser marks, or notches in the surface of the tuning surface. These markers may be used to indicate expected positions for the tow ends of the tow. Deviations from this placement are attributable to undesired latency in the start and/or start times for the movement of the tow.

In other illustrative examples, the first and second markers may be implemented using sensors on or embedded in the tuning surface. In some cases, the first and second markers may be implemented using any type of on- or in-surface feature for use in identifying the relative position of a tow end.

Once the tow is laid up, a first position of a first tow end of the tow is measured (operation **804**). A second position of a second tow end of the tow is measured (operation **806**). Operations **804** and **806** may be performed using, for example, measurement system **533** in **Figure 5****.**

Thereafter, a first error between the first position of the first tow end and an expected position for the first tow end is computed (operation **808**). Operation **808** may include, for example, computing a distance between the first position of the first tow end and the first marker on the tuning surface. Further, operation **808** may include computing a difference between a preselected distance and the distance computed between the first position of the first tow end and the first marker. This difference being outside of design tolerances is an indication that the tow placement system should be calibrated.

The preselected distance may be selected from one of about 6.35 mm (0.25 inches), 12.7 mm (0.5 inches), 19.05 mm (0.75 inches) or some other distance from the first marker. Design tolerances for the difference computed in operation **808** may be, for example, without limitation, a difference of less than or equal to ± 0.254 mm (0.01 inches), ± 0.0254 mm (0.001 inches), ± 1.27 mm (0.05 inches), ± 2.54 mm (0.10 inches) or some other ± value. The design tolerances selected may be dependent on the type of composite object being formed. In one illustrative example, the first tow end of the tow, which may be tow **522** from **Figure 5****,** that is first laid up over the tuning surface may be expected within ± 0.0254 mm (0.001 inches) of the preselected distance of 12.7 mm (0.5 inches) after the first marker.

A second error between the second position of the second tow end and an expected position for the second tow end is computed (operation **810**). Operation **810** may include, for example, computing a distance between the second position of the second tow end and the second marker on the tuning surface. Further, operation **810** may include computing a difference between a preselected distance and the distance computed between the second position of the second tow end and the second marker. This difference being outside of design tolerances is an indication that the tow placement system should be calibrated.

The preselected distance may be selected from one of about 6.35 mm (0.25 inches), 12.7 mm (0.5 inches), 19.05 mm (0.75 inches) or some other distance from the first marker. Design tolerances for the difference computed in operation **808** may be, for example, without limitation, a difference of less than or equal to ± 0.254 mm (0.01 inches), ± 0.0254 mm (0.001 inches), ± 1.27 mm (0.05 inches), ± 2.54 mm (0.10 inches) or some other ± value. The design tolerances selected may be dependent on the type of composite object being formed. In one illustrative example, the second tow end, which is laid up after the first tow end, may be expected within ± 0.0254 mm (0.001 inches) of the preselected distance of 12.7 mm (0.5 inches) before the second marker.

A determination is then made as to whether at least one of the first error or the second error is outside of selected tolerances (operation **812**). As described above, the selected tolerances may be a deviation of no more than about ± 0.254 mm (0.01 inches) from the expected position. In other illustrative examples, the selected tolerances may be a deviation of no more than about ± 0.635 mm (0.025 inches) from the expected position. In still other illustrative examples, the selected tolerances may be a deviation of no more than about ±2.54 mm (0.10 inches) or about ± 6.35 mm (0.25 inches) from the expected position.

In one illustrative example, operation **812** includes determining whether the difference between the preselected distance and the distance computed between the first position of the first tow end and the first marker is within a selected range of zero. Further, operation **812** may include determining whether the difference between the preselected distance and the distance computed between the second position of the second tow end and the second marker is within a selected range of zero. The selected range may be, for example, about ± 0.0254 mm (0.01 inches), about ± 0.254 mm (0.10 inches) or about ± 6.35 mm (0.25 inches) with respect to zero.

The selected tolerances may depend on a number of different factors. These factors may include, for example, without limitation, the type of composite material that the tows are made of, the width of the tow, the composite object or structure being ultimately formed, a speed with which the tows are being laid up, one or more other factors, or a combination thereof. For example, the tolerances for a composite spar or composite wing may be stricter than the tolerances for a fuselage panel.

With reference again to operation **812,** if neither the first error nor the second error is outside of selected tolerances, the process terminates. However, if the first error is outside of selected tolerances, a start timing offset is adjusted (operation **814**), with the process terminating thereafter. Similarly, if the second error is outside selected tolerances, a stop timing offset is adjusted (operation 816), with the process terminating thereafter. Thus, if both the first error and the second error are outside of selected tolerances, operation **814** and operation **816** are both performed.

In these illustrative examples, operation **814** may include increasing the start timing offset if the first position of the first tow end is too close to the first marker on the tuning surface and decreasing the start timing offset if the first position of the first tow end is too far away from the first marker on the tuning surface. Further, operation **816** may include decreasing the stop timing offset if the second position of the second tow end is too close to the second marker on the tuning surface and increasing the stop timing offset if the second position of the second tow end is too far away from the second marker on the tuning surface.

Operations **814** and **816** may include normalizing the start latency and stop latency, respectively. For example, in some cases, the start latency may be normalized based on a first layup speed used during the layup process to generate a normalized latency. The start timing offset may then be adjusted based on the normalized latency and a second layup speed to be used in a future layup process. Similarly, in some cases, the stop latency may be normalized based on a first layup speed used during the layup process to generate a normalized latency. The stop timing offset may then be adjusted based on the normalized latency and a second layup speed to be used in a future layup process. The second layup speed may be faster or slower than the first layup speed.

Although process **800** is described with respect to a single tow, process **800** may be similarly implemented for an entire course or sequence of tows. As one illustrative example, in operation **802,** a course of multiple, substantially parallel tows may be laid up using, for example, layup head **517** in **Figure 5****.**

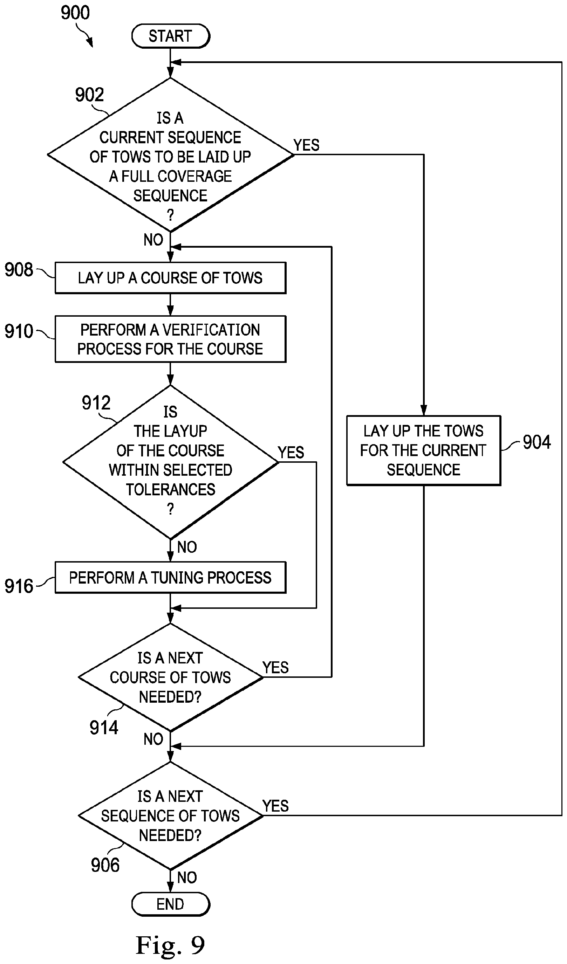

**Figure 9** is flowchart of a process for managing tow end placement in accordance with an example embodiment. Process **900** illustrated in **Figure 9** may be performed during fabrication of composite laminate **502** described in **Figure 5****.** Further, process **900** illustrated in **Figure 9** may be implemented using composite manufacturing system **506** in **Figure 5****.**

Process **900** may begin by determining whether a current sequence of tows to be laid up is a full coverage sequence (operation **902**). If the current sequence is to be a full coverage sequence, the process lays up the tows for the current sequence (operation **904**). Next, a determination is made as to whether a next sequence of tows is needed (operation **906**). If a next sequence is needed, the process returns to operation **902** described above to begin layup of the next sequence. If, however, a next sequence is not needed, the process terminates.

With reference again to operation **902,** if the current sequence is not to be a full coverage sequence, the process lays up a course of tows (operation **908**). Next, the process performs a verification process for the course (operation **910**). This verification process may be performed using, for example, verification process **526** in **Figure 5** and may be implemented using one or both of process **600** described in **Figure 6** and process **700** described in **Figure 7****.** In these illustrative examples, operation **910** may include identifying a start latency and a stop latency for each tow of the course.

A determination is made as to whether the layup of the course is within selected tolerances (operation **912**). Operation **912** includes determining whether the start latency, the stop latency, or both for the current course are within selected tolerances (e.g., a desired range). For example, operation **912** may include determining whether the identified start latencies are substantially equal to a start timing offset selected for the tow placement system and whether the identified stop latencies are substantially equal to a stop timing offset selected for the tow placement system. More specifically, operation **912** may include determining whether the identified start latencies and the identified stop latencies are within ± 0.05 seconds, ± 0.005 seconds, or some other predetermined range of the start timing offset and stop timing offset, respectively. In some cases, the average of the identified start latencies is compared to the start timing offset and the average of the identified stop latencies is compared to the stop timing offset.

If the layup of the course is within selected tolerances, a determination is made as to whether a next course of tows is needed for layup of the next sequence (operation **914**). If a next course is not needed, the process proceeds to operation **906** described above. If, however, a next course of tows is needed, the process returns to operation **908** described above.

With reference again to operation **912,** if the layup of the current course is not within selected tolerances, a tuning process is performed (operation **916**). The tuning process may be, for example, tuning process **528** described in **Figure 5****.** Further, operation **916** may be implemented using the tuning process described in process **800** of **Figure 8****.** Thereafter, the process proceeds to operation **914** described above.

In this manner, process **900** may be performed with minimal interruptions to the overall layup process. Further, no time is spent imaging the tows or analyzing the images of the tows after each sequence. Still further, no time is spent manually identifying tow ends. Process **900** may reduce or eliminate the need to rework tow ends after a sequence has been laid up because the verification process allows the tuning process to be performed before a layer of tows having discrepant ends is laid up.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent a module, a segment, a function, and/or a portion of an operation or step. In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Further, other blocks may be added in addition to the illustrated blocks in a flowchart or block diagram. For example, while the processes described herein detail a manufacturing process with a certain sequence of assembly, other processes may include different sequences for the steps of the process, as needed.

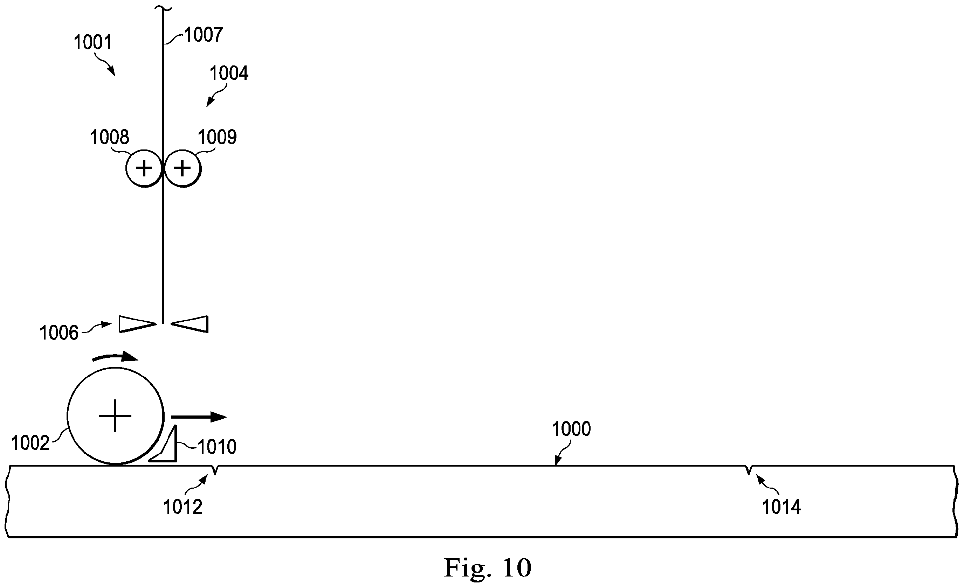

**Figures 10-14** are illustrations of the different stages in tuning process **528** from **Figure 5** in accordance with an example embodiment. Each stage occurs at a different time in the tuning process **528.**

With reference now to **Figure 10****,** an illustration of a first stage in tuning process **528** from **Figure 5** is depicted in accordance with an example embodiment. The components shown in **Figure 10** are representational only and not meant to imply any architectural limitations or requirements to the example embodiments described above. In this illustrative example, tuning surface **1000** and tow placement system **1001** are depicted. Tuning surface **1000** is a representation of tuning surface **532** in **Figure 5****.** Tow placement system **1001** includes compaction roller **1002,** tow feed mechanism **1004,** and cutter **1006.** In these illustrative examples, cutter **1006** is considered part of tow feed mechanism **1004.** In other illustrative examples, cutter **1006** may be considered separate from tow feed mechanism **1004.**

Tow **1007** is shown positioned between pinch roller **1008** and feed roller **1009** of tow feed mechanism **1004.** In this illustrative example, compaction roller **1002** has guide **1010** that helps control movement of tow **1007** relative to compaction roller **1002** as tow **1007** is fed from tow feed mechanism **1004.**

Tuning surface **1000** has first marker **1012** and second marker **1014.** In this illustrative example, first marker **1012** and second marker **1014** take the form of notches in tuning surface **1000.** Although first marker **1012** and second marker **1014** are depicted as notches in tuning surface **1000,** these markers may be implemented in other ways. For example, a sensor on or in tuning surface **1000,** tape adhered to tuning surface **1000,** an ink mark, a laser mark, or some other type of marker may be used for either or both of first marker **1012** and second marker **1014.**

The command to start actuation of pinch roller **1008** occurs at time T1. As shown in **Figure 10****,** at time T1, tow **1007** is stationary and has not yet been fed to compaction roller **1002.** This is due to the delay between the time T1 at which the start command occurs and the time T2 at which actuation of pinch roller **1008** begins. Further, compaction roller **1002** is positioned before first marker **1012.**

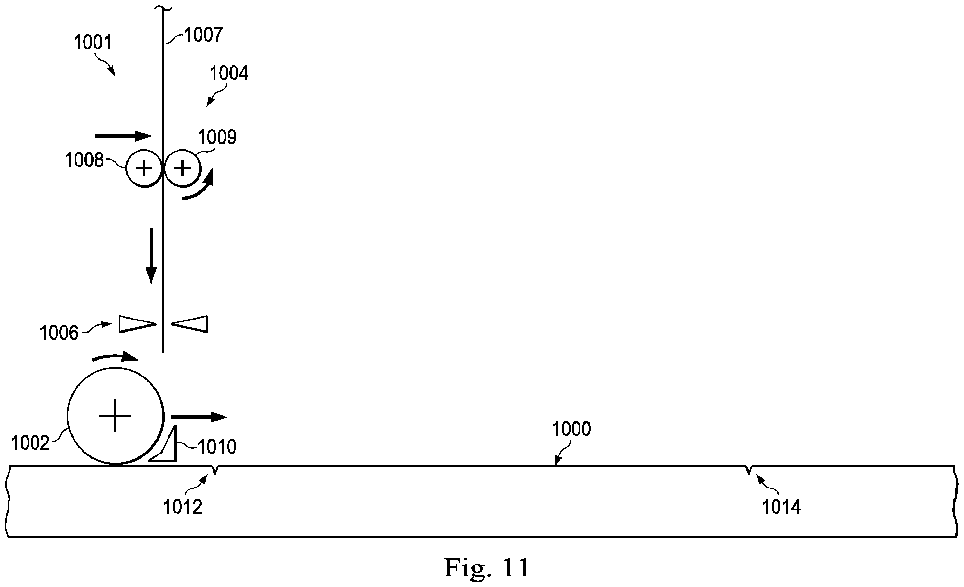

Turning now to **Figure 11****,** a second stage in tuning process **528** is depicted. This second stage begins when pinch roller **1008** is actuated to pinch (or nip) tow **1007.** This pinching of tow **1007** while feed roller **1009** is turning feeds tow **1007** to compaction roller **1002.**

Movement of tow **1007** begins at time T2, which is later than time T1 described with respect to **Figure 10** above. The time interval between time T1 and time T2 establishes start timing offset **546** described in **Figure 5****.**

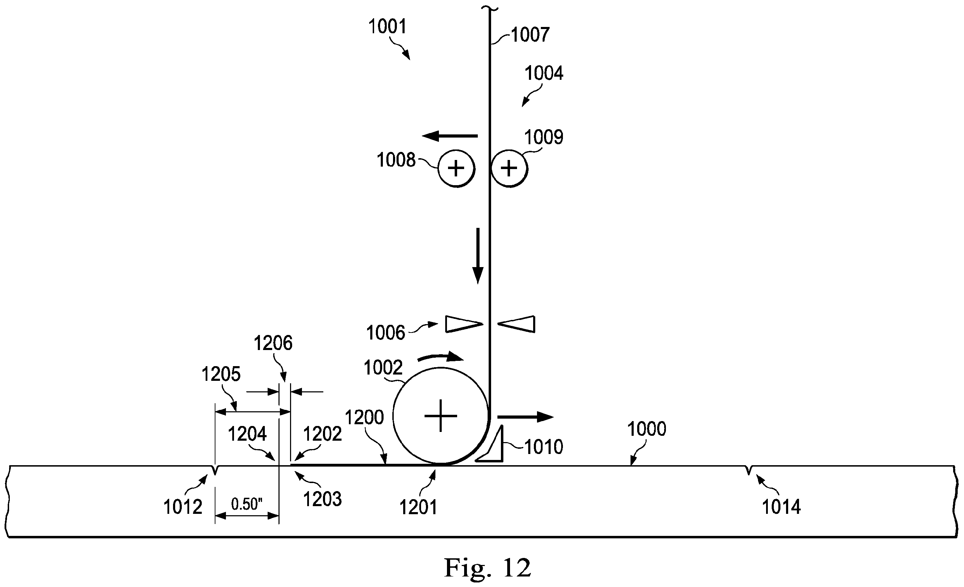

With reference now to **Figure 12****,** a third stage in tuning process **528** is depicted. During the third stage, tow **1007** is fed through tow feed mechanism **1004** and laid up on tuning surface **1000** to begin the formation of test tow **1200.** Nip **1201** of compaction roller **1002** compresses the portion of tow **1007** that passes between roller **1002** and tuning surface **1000** to layup that portion of tow **1007** as part of test tow **1200.**

The rolling of compaction roller **1002** causes first tow end **1202** of test tow **1200** to be placed at position **1203** after first marker **1012** on tuning surface **1000.** Expected position **1204** for first tow end **1202** may be expected at about 12.7 mm (0.5 inches) away from first marker **1012.** Position **1203** of first tow end **1202** may be at a different distance **1205** from first marker **1012,** which may be, for example, about 13.2 mm (0.52 inches) away from first marker **1012.** Any deviation of position **1203** from expected position **1204** may be displacement **1206** that is considered an error.

When the error is not within allowed tolerances, this is an indication that start timing offset **546** needs to be adjusted. For example, if position **1203** of first tow end **1202** is too close to first marker **1012,** start timing offset **546** may need to be increased. If position **1203** of first tow end **1202** is too far away from first marker **1012,** start timing offset **546** may need to be decreased. Thus, tuning process **528** is used to establish start timing offset **546** between time T1 and time T2 to be used during the layup process and verification process **526.**

When the system is operating as expected, the start latency determined during verification process **526** is substantially equal to start timing offset **546** established between time T1 and time T2 during tuning process **528.** During verification process **526,** a sensor device in sensor system **514** may be implemented relative to or as part of tow feed mechanism **1004** to detect the time between time T1 and time T2 during the layup process. During verification process **526,** placements of the first tow ends of tows are assumed to be acceptable if the start latency between time T1 and time T2 does not drift away from start timing offset **546** established during tuning process **528.**

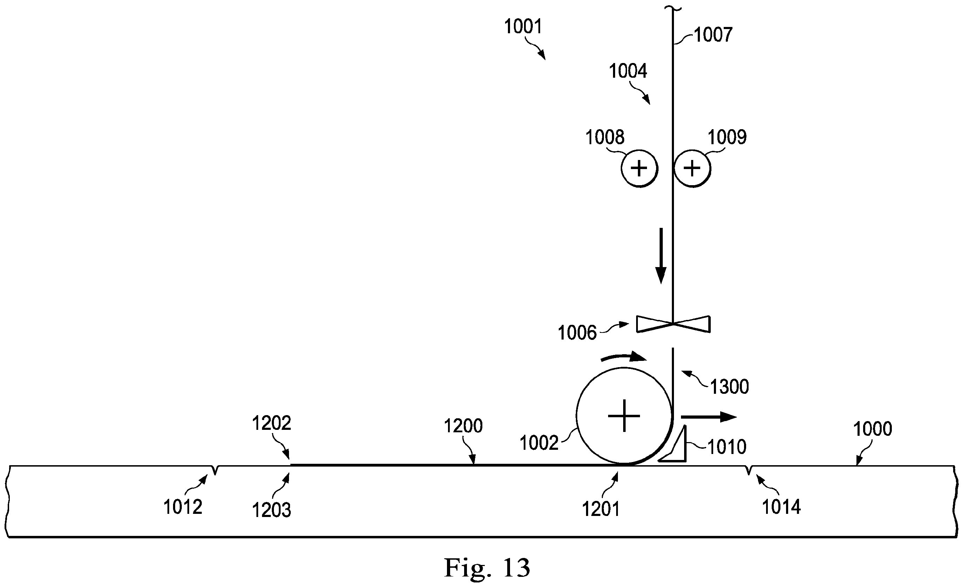

Turning now to **Figure 13****,** a fourth stage in tuning process **528** from **Figure 5** is depicted. At the fourth stage, cutter **1006** has been actuated to cut tow **1007** such that compaction roller **1002** will lay up the final portion of test tow **1200** on tuning surface **1000** to fully form test tow **1200.** The cut of tow **1007** by cutter **1006** determines the final length of test tow **1200.**

Guide **1010** helps ensure that end portion **1300** of tow **1007** substantially conforms to or follows compaction roller **1002.** Guide **1010** may help ensure that end portion **1300** moves in coordination with compaction roller **1002.** In particular, guide **1010** helps ensure that end portion **1300** of tow **1007** is guided into nip **1201** of compaction roller **1002.** Locating guide **1010** close to nip **1201** of compaction roller **1002** may eliminate an uncontrolled length of tow **1007** after tow **1007** is cut.

The command to start actuation of cutter **1006** occurs at time T3. Movement of tow **1007** through tow feed mechanism **1004** stops at time T4. The time between T3 and T4 establishes stop timing offset **548** described in **Figure 5****.**

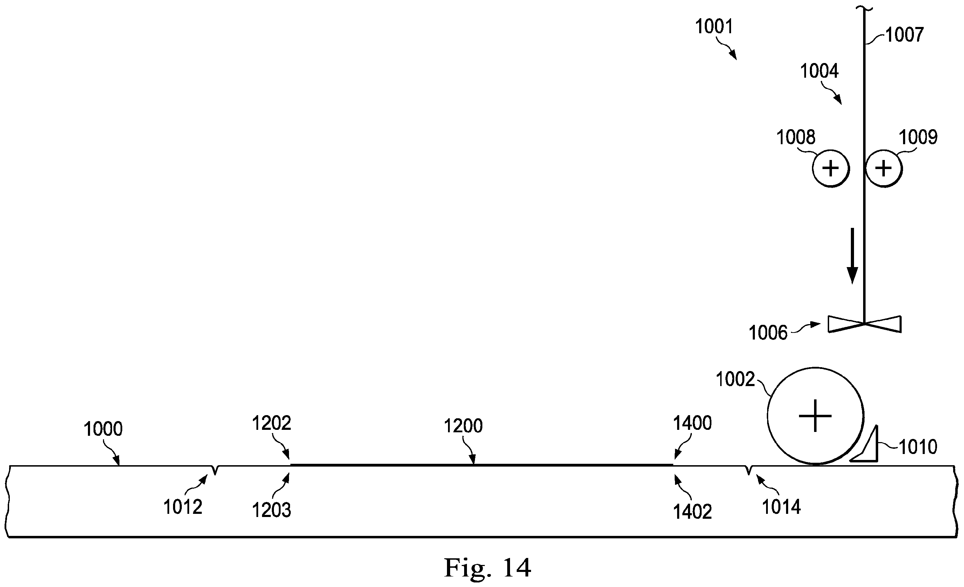

**Figure 14** depicts a fifth stage of tuning process **528** from **Figure 5****.** At the fifth state, test tow **1200** is completed. Although compaction roller **1002** is shown as having moved past second marker **1014,** in other illustrative examples, tow placement system **1001,** and thereby compaction roller **1002** may stop just after test tow **1200** has been completed and moved away to another position over tuning surface **1000.**

Second tow end **1400** of test tow **1200** ends up at position **1402** on tuning surface **1000.** Position **1402** may be expected at about 12.7 mm (0.5 inches) away from second marker **1014.** Any deviation of position **1402** from the expected position may be considered an error. When the error is not within allowed tolerances, this is an indication that stop timing offset **548** needs to be adjusted. For example, if position **1402** of second tow end **1400** is too close to second marker **1014,** stop timing offset **548** may need to be decreased. If position **1402** of second tow end **1400** is too far away from second marker **1014,** stop timing offset **548** may need to be increased.

When the system is operating as expected, the stop latency determined during verification process **526** is substantially equal to stop timing offset **548** established between time T3 and time T4 during tuning process **528.** During verification process **526,** a sensor device in sensor system **514** may be implemented relative to or as part of tow feed mechanism **1004** to detect the time between time T3 (i.e. stop command time) and time T4 (i.e. stop time of movement of tow **1007**) during the layup process. This sensor device may be the same one used for detecting the time between time T1 (i.e. start command time) and time T2 (i.e. start time for movement of tow **1007**) described in **Figure 10** above, or a different sensor device. During verification process **526,** placements of the second tow ends of the tows are assumed to be acceptable if the stop latency between time T3 and time T4 does not drift away from stop timing offset **548** established during tuning process **528.**

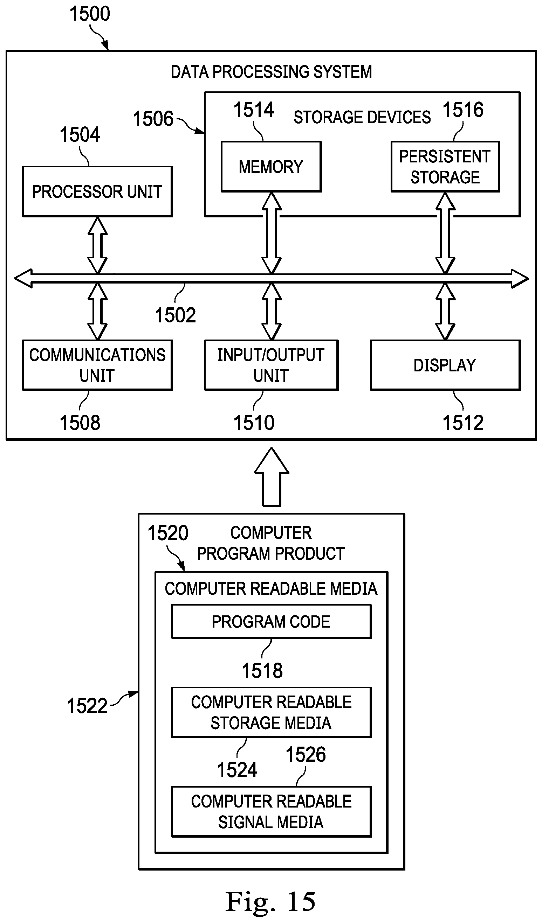

Turning now to **Figure 15****,** an illustration of a data processing system in the form of a block diagram is depicted in accordance with an illustrative embodiment. Data processing system **1500** may be used to implement control system **512** and/or computer system **515** in **Figure 5****.** As depicted, data processing system **1500** includes communications framework **1502,** which provides communications between processor unit **1504,** storage devices **1506,** communications unit **1508,** input/output unit **1510,** and display **1512.** In some cases, communications framework **1502** may be implemented as a bus system.

Processor unit **1504** is configured to execute instructions for software to perform a number of operations. Processor unit **1504** may comprise a number of processors, a multi-processor core, and/or some other type of processor, depending on the implementation. In some cases, processor unit **1504** may take the form of a hardware unit, such as a circuit system, an application specific integrated circuit (ASIC), a programmable logic device, or some other suitable type of hardware unit.

Instructions for the operating system, applications, and/or programs run by processor unit 1504 may be located in storage devices **1506.** Storage devices **1506** may be in communication with processor unit **1504** through communications framework **1502.** As used herein, a storage device, also referred to as a computer readable storage device, is any piece of hardware capable of storing information on a temporary and/or permanent basis. This information may include, but is not limited to, data, program code, and/or other information.

Memory **1514** and persistent storage **1516** are examples of storage devices **1506.** Memory **1514** may take the form of, for example, a random access memory or some type of volatile or non-volatile storage device. Persistent storage **1516** may comprise any number of components or devices. For example, persistent storage **1516** may comprise a hard drive, a flash memory, a rewritable optical disk, a rewritable magnetic tape, or some combination of the above. The media used by persistent storage **1516** may or may not be removable.

Communications unit **1508** allows data processing system **1500** to communicate with other data processing systems and/or devices. Communications unit **1508** may provide communications using physical and/or wireless communications links.

Input/output unit **1510** allows input to be received from and output to be sent to other devices connected to data processing system **1500.** For example, input/output unit **1510** may allow user input to be received through a keyboard, a mouse, and/or some other type of input device. As another example, input/output unit **1510** may allow output to be sent to a printer connected to data processing system **1500.**

Display **1512** is configured to display information to a user. Display **1512** may comprise, for example, without limitation, a monitor, a touch screen, a laser display, a holographic display, a virtual display device, and/or some other type of display device.

In this illustrative example, the processes of the different illustrative embodiments may be performed by processor unit **1504** using computer-implemented instructions. These instructions may be referred to as program code, computer usable program code, or computer readable program code and may be read and executed by one or more processors in processor unit **1504.**

In these examples, program code **1518** is located in a functional form on computer readable media **1520,** which is selectively removable, and may be loaded onto or transferred to data processing system **1500** for execution by processor unit **1504.** Program code **1518** and computer readable media **1520** together form computer program product **1522.** In this illustrative example, computer readable media **1520** may be computer readable storage media **1524** or computer readable signal media **1526.**

Computer readable storage media **1524** is a physical or tangible storage device used to store program code **1518** rather than a medium that propagates or transmits program code **1518.** Computer readable storage media **1524** may be, for example, without limitation, an optical or magnetic disk or a persistent storage device that is connected to data processing system **1500.**

Alternatively, program code **1518** may be transferred to data processing system **1500** using computer readable signal media **1526.** Computer readable signal media **1526** may be, for example, a propagated data signal containing program code **1518.** This data signal may be an electromagnetic signal, an optical signal, and/or some other type of signal that can be transmitted over physical and/or wireless communications links.

The illustration of data processing system **1500** in **Figure 15** is not meant to provide architectural limitations to the manner in which the illustrative embodiments may be implemented. The different illustrative embodiments may be implemented in a data processing system that includes components in addition to or in place of those illustrated for data processing system **1500.** Further, components shown in **Figure 15** may be varied from the illustrative examples shown.

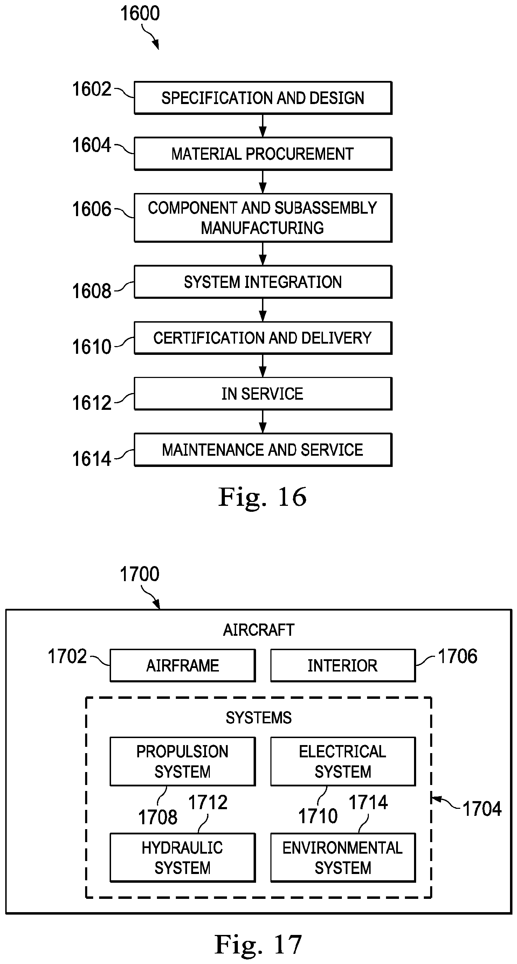

Illustrative embodiments of the disclosure may be described in the context of aircraft manufacturing and service method **1600** as shown in **Figure 16** and aircraft **1700** as shown in **Figure 17****.** Turning first to **Figure 16****,** an illustration of an aircraft manufacturing and service method is depicted in accordance with an illustrative embodiment. During pre-production, aircraft manufacturing and service method **1600** may include specification and design **1602** of aircraft **1700** in **Figure 17** and material procurement **1604.**

During production, component and subassembly manufacturing **1606** and system integration **1608** of aircraft **1700** in **Figure 17** takes place. Thereafter, aircraft **1700** in **Figure 17** may go through certification and delivery **1610** in order to be placed in service **1612.** While in service **1612** by a customer, aircraft **1700** in **Figure 17** is scheduled for routine maintenance and service **1614,** which may include modification, reconfiguration, refurbishment, and other maintenance or service.

Each of the processes of aircraft manufacturing and service method **1600** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 17****,** an illustration of an aircraft is depicted in which an illustrative embodiment may be implemented. In this example, aircraft **1700** is produced by aircraft manufacturing and service method **1600** in **Figure 16** and may include airframe **1702** with plurality of systems **1704** and interior **1706.** Examples of systems **1704** include one or more of propulsion system **1708,** electrical system **1710,** hydraulic system **1712,** and environmental system **1714.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1600** in **Figure 16****.** In particular, composite laminate **502** from **Figure 5** may be manufactured during any one of the stages of aircraft manufacturing and service method **1600.** For example, without limitation, composite laminate **502** may be formed during at least one of component and subassembly manufacturing **1606,** system integration **1608,** routine maintenance and service **1614,** or some other stage of aircraft manufacturing and service method **1600.** Further, composite laminate **502** may be used to form a structure or other object that is part of airframe **1702,** interior **1706,** or some other portion of aircraft **1700.**

In one illustrative example, components or subassemblies produced in component and subassembly manufacturing **1606** in **Figure 16** may be fabricated or manufactured in a manner similar to components or subassemblies produced while aircraft **1700** is in service **1612** in **Figure 16****.** As yet another example, one or more apparatus embodiments, method embodiments, or a combination thereof may be utilized during production stages, such as component and subassembly manufacturing **1606** and system integration **1608** in **Figure 16****.** One or more apparatus embodiments, method embodiments, or a combination thereof may be utilized while aircraft **1700** is in service **1612** and/or during maintenance and service **1614** in **Figure 16****.** The use of a number of the different illustrative embodiments may substantially expedite the assembly of and/or reduce the cost of aircraft **1700.**

As used herein, the phrase "at least one of," when used with a list of items, means different combinations of one or more of the listed items may be used and only one of the items in the list may be needed. The item may be a particular object, thing, step, operation, process, or category. In other words, "at least one of" means any combination of items or number of items may be used from the list, but not all of the items in the list may be required. For example, without limitation, "at least one of item A, item B, or item C" or "at least one of item A, item B, and item C" may mean item A; item A and item B; item B; item A, item B, and item C; item B and item C; or item A and C. In some cases, "at least one of item A, item B, or item C" or "at least one of item A, item B, and item C" may mean, but is not limited to, two of item A, one of item B, and ten of item C; four of item B and seven of item C; or some other suitable combination.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for managing tow end placement, the method comprising:
detecting (604) a start time (538) at which movement of a tow (522) is initiated for a layup process; and/or
detecting (704) a stop time (542) at which movement of a tow (522) is halted for a layup process;
wherein detecting (604) the start time (538) comprises:
determining (606) a start latency (540) between the start time (538) and a start command time (534) at which a start command (536) to begin movement of the tow (522) is received;
determining (608) whether the start latency (540) is within a desired range; and
adjusting (610) a start timing offset (546) used by a control system (512) that controls tow layup in response to a determination that the start latency (540) is not within the desired range, wherein detecting (704) the stop time (542) comprises:
determining (706) a stop latency (544) between the stop time (542) and a stop command time (535) at which a stop command (537) to halt movement of the tow (522) is received,
wherein adjusting (610) the start timing offset (546) comprises measuring a position of a first tow end (1202) of a test tow (1200) on a tuning surface (532).

2. The method of claim 1, wherein adjusting (610) the start timing offset (546) further comprises:
computing an error between the position (1203) of the tow end (1202) of the test tow (1200) and an expected position (1204) for the tow end (1202) of the test tow (1200) and determining whether the error is within selected tolerances.

3. The method of claim 1 or 2, wherein adjusting (610) the start timing offset (546) further comprises adjusting the start timing offset (546) based on the error.

4. The method of any of the preceding claims, further comprising:
normalizing the start latency (540) based on a first layup speed used during the layup process to generate a normalized latency, wherein the start command (536) is an actuation command for a tow feed mechanism (1004), preferably wherein adjusting (610) the start timing offset (546) further comprises: adjusting the start timing offset (546) based on the normalized latency and a second layup speed to be used in a future layup process.

5. The method of any of the preceding claims, wherein detecting (604) the start time (538) comprises:
detecting the start time (538) using a sensor (514) that detects when the movement of the tow (522) begins.

6. The method of any of the preceding claims, wherein adjusting (610) the start timing offset (546) further comprises:
adjusting the start timing offset (546) to control a numerically-controlled system (510) that performs the layup process.

7. The method of any of the preceding claims, wherein the stop command (537) is an actuation command for a tow feed mechanism (1004).

8. The method of any of the preceding claims, further comprising;
determining (708) whether the stop latency (544) is within a desired range; and
adjusting (710) a stop timing offset (548) used by a control system (512) when the stop latency (544) is not within the desired range, preferably wherein the control system (512) controls tow layup in response to the determination that the stop latency (544) is not within the desired range.

9. The method of claim 8, wherein adjusting (710) the stop timing offset (548) comprises:
adjusting the stop timing offset (548) to control a numerically-controlled system (510) that performs the layup process.

10. An apparatus for verifying tow end placement, the apparatus comprising:
a sensor system (514) that detects a start time (538) at which movement of a tow (522) is initiated for a layup process, and/or detects a stop time (542) at which movement of the/a tow (522) is halted for a layup process; and
a control system (512) that determines a start latency (540) between the start time (538) and a start command time (534) at which a start command (536) to begin movement of the tow (522) is received; determines whether the start latency (540) is within a desired range; and adjusts a start timing offset (546) used by the control system (512) in response to a determination that the start latency (540) is not within the desired range, and/or
wherein the control system (512) determines a stop latency (544) between the stop time (542) and a stop command time (535) at which a stop command (537) to halt movement of the tow (522) is received, further comprising:
a tuning surface (532), wherein the control system (512) identifies a position (1203) of a first tow end (1202) of a test tow (1200) laid up on the tuning surface (532);
computes an error between the position (1203) of the end of the tow (522) and an expected position for the end of the tow (522); and
determines whether the error is within selected tolerances.

11. The apparatus of claim 10, wherein the control system (512) determines whether the stop latency (544) is within a desired range; and adjusts a stop timing offset (548) used by the control system (512) in response to a determination that the stop latency (544) is not within the desired range, and/or wherein the start command (536) is an actuation command for a tow feed mechanism (1004), preferably wherein the actuation command is for a pinch roller (1008).

12. The apparatus of claim 10 or 11, wherein the control system (512) adjusts the start timing offset (546) based on the error.

13. The apparatus of any of the preceding claims 10-12, wherein the control system (512) normalizes the start latency (540) based on a first layup speed used during the layup process to generate a normalized latency, preferably wherein the control system (512) adjusts the start timing offset (546) based on the normalized latency and a second layup speed to be used in a future layup process.

14. The apparatus of any of the claims 10-13, wherein the sensor system (514) includes a sensor device for each tow feed mechanism (1004) of an automated fiber placement (AFP) system (510).

15. The apparatus of any of the preceding claims 10-14, wherein when used for detecting the stop time, the control system (512) determines a stop latency (544) between the stop time (542) and a stop command time (535) at which a stop command to stop movement of the tow (522) is received, wherein the stop command (537) is an actuation command for a tow feed mechanism (1004), preferably wherein the control system (512) further determines whether the stop latency (544) is within a desired range; and adjusts a stop timing offset (548) used by the control system (512) when the stop latency (544) is not within the desired range, more preferably further comprising:
a numerically-controlled automated fiber placement system (510) that is controlled by the control system (512) based on adjustments to the start timing offset (546) and the stop timing offset (548).

## Patentansprüche

1. Verfahren zum Verwalten einer Wergendplatzierung, wobei das Verfahren Folgendes umfasst:
Erfassen (604) einer Startzeit (538), zu der die Bewegung eines Wergs (522) für einen Auflegevorgang eingeleitet wird; und/oder
Erfassen (704) einer Stoppzeit (542), zu der die Bewegung eines Wergs (522) für einen Auflegevorgang angehalten wird;
wobei das Erfassen (604) der Startzeit (538) Folgendes umfasst:
Bestimmen (606) einer Startlatenz (540) zwischen der Startzeit (538) und einer Startbefehlszeit (534), zu der ein Startbefehl (536) zum Beginnen der Bewegung des Wergs (522) empfangen wird,
Bestimmen (608), ob die Startlatenz (540) innerhalb eines gewünschten Bereichs liegt; und
Anpassen (610) eines Startzeitversatzes (546), der von einem Steuersystem (512) verwendet wird, das das Auflegen des Wergs steuert, als Reaktion auf die Bestimmung, dass die Startlatenz (540) nicht innerhalb des gewünschten Bereichs liegt, wobei das Erfassen (704) der Stoppzeit (542) Folgendes umfasst:
Bestimmen (706) einer Stopplatenz (544) zwischen der Stoppzeit (542) und einer Stoppbefehlszeit (535), zu der ein Stoppbefehl (537) zum Anhalten der Bewegung des Wergs (522) empfangen wird,
wobei das Anpassen (610) des Startzeitversatzes (546) das Messen einer Position eines ersten Wergendes (1202) eines Testwergs (1200) auf einer Abstimmfläche (532) umfasst.

2. Verfahren nach Anspruch 1, wobei das Anpassen (610) des Startzeitversatzes (546) ferner Folgendes umfasst:
Berechnen eines Fehlers zwischen der Position (1203) des Wergendes (1202) des Testwergs (1200) und einer erwarteten Position (1204) für das Wergende (1202) des Testwergs (1200), und Bestimmen, ob der Fehler innerhalb ausgewählter Toleranzen liegt.

3. Verfahren nach Anspruch 1 oder 2, wobei das Anpassen (610) des Startzeitversatzes (546) außerdem das Anpassen des Startzeitversatzes (546) basierend auf dem Fehler umfasst.

4. Verfahren nach einem der vorhergehenden Ansprüche, das ferner Folgendes umfasst: Normalisieren der Startlatenz (540) basierend auf einer ersten Auflegegeschwindigkeit, die während des Auflegevorgangs verwendet wird, um eine normalisierte Latenz zu erzeugen, wobei es sich bei dem Startbefehl (536) um einen Betätigungsbefehl für einen Wergvorschubmechanismus (1004) handelt, wobei das Anpassen (610) des Startzeitversatzes (546) vorzugsweise ferner Folgendes umfasst: Anpassen des Startzeitversatzes (546) basierend auf der normalisierten Latenz und einer zweiten Auflegegeschwindigkeit, die in einem zukünftigen Auflegevorgang verwendet werden soll.

5. Verfahren nach einem der vorhergehenden Ansprüche, wobei das Erfassen (604) der Startzeit (538) Folgendes umfasst:
Erfassen der Startzeit (538) unter Verwendung eines Sensors (514), der erfasst, wann die Bewegung des Wergs (522) beginnt.

6. Verfahren nach einem der vorhergehenden Ansprüche, wobei das Anpassen (610) des Startzeitversatzes (546) ferner Folgendes umfasst:
Anpassen des Startzeitversatzes (546), um ein numerisch gesteuertes System (510) zu steuern, das den Auflegevorgang durchführt.

7. Verfahren nach einem der vorhergehenden Ansprüche, wobei es sich bei dem Stoppbefehl (537) um einen Betätigungsbefehl für einen Wergvorschubmechanismus (1004) handelt.

8. Verfahren nach einem der vorhergehenden Ansprüche, das ferner Folgendes umfasst:
Bestimmen (708), ob die Stopplatenz (544) innerhalb eines gewünschten Bereichs liegt; und
Anpassen (710) eines Stoppzeitversatzes (548), der von einem Steuersystem (512) verwendet wird, wenn die Stopplatenz (544) nicht innerhalb des gewünschten Bereichs liegt, wobei das Steuersystem (512) vorzugsweise das Auflegen des Wergs als Reaktion auf das Bestimmen steuert, dass die Stopplatenz (544) nicht innerhalb des gewünschten Bereichs liegt.

9. Verfahren nach Anspruch 8, wobei das Anpassen (710) des Stoppzeitversatzes (548) Folgendes umfasst:
Anpassen des Stoppzeitversatzes (548), um ein numerisch gesteuertes System (510) zu steuern, das den Auflegevorgang durchführt.

10. Vorrichtung zur Verifizierung einer Wergendplatzierung, wobei die Vorrichtung Folgendes umfasst:
ein Sensorsystem (514), das eine Startzeit (538) erfasst, zu der die Bewegung eines Wergs (522) für einen Ablegevorgang eingeleitet wird, und/oder eine Stoppzeit (542) erfasst, zu der die Bewegung des/eines Wergs (522) für einen Ablegevorgang angehalten wird; und
ein Steuersystem (512), das eine Startlatenz (540) zwischen der Startzeit (538) und einer Startbefehlszeit (534), zu der ein Startbefehl (536) zum Beginnen der Bewegung des Wergs (522) empfangen wird, bestimmt, bestimmt, ob die Startlatenz (540) innerhalb eines gewünschten Bereichs liegt; und einen Startzeitversatz (546) anpasst, der von dem Steuersystem (512) verwendet wird, als Reaktion auf eine Bestimmung, dass die Startlatenz (540) nicht innerhalb des gewünschten Bereichs liegt, und/oder
wobei das Steuersystem (512) eine Stopplatenz (544) zwischen der Stoppzeit (542) und einer Stoppbefehlszeit (535), zu der ein Stoppbefehl (537) zum Anhalten der Bewegung des Wergs (522) empfangen wird, bestimmt, wobei die Vorrichtung ferner Folgendes umfasst:
eine Abstimmfläche (532), wobei das Steuersystem (512) eine Position (1203) eines ersten Wergendes (1202) eines Testwergs (1200), das auf der Abstimmfläche (532) aufgelegt ist, identifiziert;
einen Fehler zwischen der Position (1203) des Endes des Wergs (522) und einer erwarteten Position für das Ende des Wergs (522) berechnet; und
bestimmt, ob der Fehler innerhalb ausgewählter Toleranzen liegt.

11. Vorrichtung nach Anspruch 10, wobei das Steuersystem (512) bestimmt, ob die Stopplatenz (544) innerhalb eines gewünschten Bereichs liegt; und einen Stoppzeitversatz (548) anpasst, der von dem Steuersystem (512) verwendet wird, als Reaktion auf eine Bestimmung, dass die Stopplatenz (544) nicht innerhalb des gewünschten Bereichs liegt, und/oder wobei es sich bei dem Startbefehl (536) um einen Betätigungsbefehl für einen Wergvorschubmechanismus (1004) handelt, wobei der Betätigungsbefehl vorzugsweise für eine Andruckwalze (1008) gilt.

12. Vorrichtung nach Anspruch 10 oder 11, wobei das Steuersystem (512) den Startzeitversatz (546) basierend auf dem Fehler anpasst.

13. Vorrichtung nach einem der vorhergehenden Ansprüche 10 bis 12, wobei das Steuersystem (512) die Startlatenz (540) basierend auf einer ersten Auflegegeschwindigkeit , die während des Auflegevorgangs verwendet wird, normalisiert, um eine normalisierte Latenz zu erzeugen, wobei das Steuersystem (512) vorzugsweise den Startzeitversatz (546) basierend auf der normalisierten Latenz und einer zweiten Auflegegeschwindigkeit anpasst, die in einem zukünftigen Auflegevorgang verwendet werden soll.

14. Vorrichtung nach einem der vorhergehenden Ansprüche 10 bis 13, wobei das Sensorsystem (514) eine Sensorvorrichtung für jeden Wergvorschubmechanismus (1004) eines automatischen Faserplatzierungssystems (AFP-Systems) (510) umfasst.

15. Vorrichtung nach einem der vorhergehenden Ansprüche 10 bis 14, wobei das Steuersystem (512) bei Verwendung zum Erfassen der Stoppzeit eine Stopplatenz (544) zwischen der Stoppzeit (542) und einer Stoppbefehlszeit (535) bestimmt, zu der ein Stoppbefehl zum Stoppen der Bewegung des Wergs (522) empfangen wird, wobei es sich bei dem Stoppbefehl (537) um einen Betätigungsbefehl für einen Wergvorschubmechanismus (1004) handelt, wobei das Steuersystem (512) vorzugsweise ferner bestimmt, ob die Stopplatenz (544) innerhalb eines gewünschten Bereichs liegt; und einen Stoppzeitversatz (548) anpasst, der von einem Steuersystem (512) verwendet wird, wenn die Stopplatenz (544) nicht innerhalb des gewünschten Bereichs liegt, besonders bevorzugt ferner umfassend:
ein numerisch gesteuertes automatisiertes Faserplatzierungssystem (510), das durch das Steuersystem (512) basierend auf Anpassungen des Startzeitversatzes (546) und des Stoppzeitversatzes (548) gesteuert wird.

## Revendications

1. Procédé de gestion de mise en place d'extrémités de mèche, le procédé comprenant :
la détection (604) d'un instant de démarrage (538) auquel le déplacement d'une mèche (522) est amorcé pour un processus de dépose, et/ou
la détection (704) d'un instant d'arrêt (542) auquel le déplacement d'une mèche (522) est interrompu pour un processus de dépose ;
ladite détection (604) de l'instant de démarrage (538) comprenant :
la détermination (606) d'une latence de démarrage (540) entre l'instant de démarrage (538) et un instant de commande de démarrage (534) auquel est reçu une commande de démarrage (536) visant à commencer le déplacement de la mèche (522),
la détermination (608) du fait que la latence de démarrage (540) se trouve dans un intervalle voulu ou non, et
le réglage (610) d'un décalage d'instant de démarrage (546), utilisé par un système de commande (512) qui commande la dépose de mèche, en réaction à la détermination du fait que la latence de démarrage (540) ne se trouve pas dans l'intervalle voulu, ladite détection (704) l'instant d'arrêt (542) comprenant :
la détermination (706) d'une latence d'arrêt (544) entre l'instant d'arrêt (542) et un instant de commande d'arrêt (535) auquel est reçue une commande d'arrêt (537) visant à interrompre le déplacement de la mèche (522),
ledit réglage (610) du décalage d'instant de démarrage (546) comprenant la mesure d'une position d'une première extrémité de mèche (1202) appartenant à une mèche d'essai (1200) sur une surface d'adaptation (532).

2. Procédé selon la revendication 1, dans lequel le réglage (610) du décalage d'instant de démarrage (546) comprend en outre :
le calcul d'une erreur entre la position (1203) de l'extrémité de mèche (1202) appartenant à la mèche d'essai (1200) et une position escomptée (1204) de l'extrémité de mèche (1202) appartenant à la mèche d'essai (1200), et la détermination du fait que l'erreur se trouve dans certaines tolérances ou non.

3. Procédé selon la revendication 1 ou 2, dans lequel le réglage (610) du décalage d'instant de démarrage (546) comprend en outre le réglage du décalage d'instant de démarrage (546) compte tenu de l'erreur.

4. Procédé selon l'une quelconque des revendications précédentes, comprenant en outre :
la normalisation de la latence de démarrage (540) compte tenu d'une première vitesse de dépose, utilisée pendant le processus de dépose, pour générer une latence normalisée, ladite commande de démarrage (536) étant une commande d'actionnement destinée à un mécanisme d'apport de mèche (1004), ledit réglage (610) du décalage d'instant de démarrage (546) comprenant de préférence en outre : le réglage du décalage d'instant de démarrage (546) compte tenu de la latence normalisée et d'une deuxième vitesse de dépose qui sera utilisée au cours d'un processus de dépose à venir.

5. Procédé selon l'une quelconque des revendications précédentes, dans lequel la détection (604) de l'instant de démarrage (538) comprend :
la détection de l'instant de démarrage (538) au moyen d'un détecteur (514) qui détecte le moment auquel commence le déplacement de la mèche (522).

6. Procédé selon l'une quelconque des revendications précédentes, dans lequel le réglage (610) du décalage d'instant de démarrage (546) comprend en outre :
le réglage du décalage d'instant de démarrage (546) pour commander un système à commande numérique (510) réalisant le processus de dépose.

7. Procédé selon l'une quelconque des revendications précédentes, dans lequel la commande d'arrêt (537) est une commande d'actionnement destinée à un mécanisme d'apport de mèche (1004).

8. Procédé selon l'une quelconque des revendications précédentes, comprenant en outre :
la détermination (708) du fait que la latence d'arrêt (544) se trouve dans l'intervalle voulu ou non, et
le réglage (710) d'un décalage d'instant d'arrêt (548), utilisé par un système de commande (512), lorsque la latence d'arrêt (544) ne se trouve pas dans l'intervalle voulu, ledit système de commande (512) commandant de préférence la dépose de mèche en réaction à la détermination du fait que la latence d'arrêt (544) ne se trouve pas dans l'intervalle voulu.

9. Procédé selon la revendication 8, dans lequel le réglage (710) du décalage d'instant d'arrêt (548) comprend :
le réglage du décalage d'instant d'arrêt (548) pour commander un système à commande numérique (510) réalisant le processus de dépose.

10. Dispositif de vérification de la mise en place d'extrémités de mèche, le dispositif comprenant :
un système de détection (514) qui détecte un instant de démarrage (538) auquel le déplacement d'une mèche (522) est amorcé pour un processus de dépose, et/ou détecte un instant d'arrêt (542) auquel le déplacement de la/d'une mèche (522) est interrompu pour un processus de dépose ; et
un système de commande (512) qui : détermine une latence de démarrage (540) entre l'instant de démarrage (538) et un instant de commande de démarrage (534) auquel est reçue une commande de démarrage (536) visant à commencer le déplacement de la mèche (522), détermine si la latence de démarrage (540) se trouve dans l'intervalle voulu, et règle un décalage d'instant de démarrage (546) utilisé par le système de commande (512) en réaction à la détermination du fait que la latence de démarrage (540) ne se trouve pas dans l'intervalle voulu, et/ou
le système de commande (512) détermine une latence d'arrêt (544) entre l'instant d'arrêt (542) et un instant de commande d'arrêt (535) auquel est reçue une commande d'arrêt (537) visant à interrompre le déplacement de la mèche (522) ; ledit dispositif comprenant en outre :
une surface d'adaptation (532),
ledit système de commande (512)
identifiant une position (1203) d'une première extrémité de mèche (1202) appartenant à une mèche d'essai (1200) déposée sur la surface d'adaptation (532),
calculant une erreur entre la position (1203) de l'extrémité de la mèche (522) et une position escomptée de l'extrémité de la mèche (522), et
déterminant si l'erreur se trouve dans certaines tolérances ou non.

11. Dispositif selon la revendication 10, dans lequel le système de commande (512) détermine si la latence d'arrêt (544) se trouve dans l'intervalle voulu ou non et règle un décalage d'instant d'arrêt (548) utilisé par le système de commande (512) en réaction à la détermination du fait que la latence d'arrêt (544) ne se trouve pas dans l'intervalle voulu, et/ou dans lequel la commande de démarrage (536) est une commande d'actionnement destinée à un mécanisme d'apport de mèche (1004), ladite la commande d'actionnement étant de préférence destinée à un rouleau pinceur (1008).

12. Dispositif selon la revendication 10 ou 11, dans lequel le système de commande (512) règle le décalage d'instant de démarrage (546) compte tenu de l'erreur.

13. Dispositif selon l'une quelconque des revendications précédentes 10 à 12, dans lequel le système de commande (512) normalise la latence de démarrage (540) compte tenu d'une première vitesse de dépose, utilisée pendant le processus de dépose, pour générer une latence normalisée; dans lequel le système de commande (512) règle de préférence le décalage d'instant de démarrage (546) compte tenu de la latence normalisée et d'une deuxième vitesse de dépose qui sera utilisée au cours d'un processus de dépose à venir.

14. Dispositif selon l'une quelconque des revendications précédentes 10 à 13, dans lequel le système de détection (514) comporte un dispositif de détection pour chaque mécanisme d'apport de mèche (1004) d'un système de placement automatisé de fibres (AFP, automated fiber placement) (510).

15. Dispositif selon l'une quelconque des revendications précédentes 10 à 14, dans lequel, lorsqu'il est utilisé pour la détection de l'instant d'arrêt, le système de commande (512) détermine une latence d'arrêt (544) entre l'instant d'arrêt (542) et un instant de commande d'arrêt (535) auquel est reçue une commande d'arrêt visant à arrêter le déplacement de la mèche (522), ladite commande d'arrêt (537) étant une commande d'actionnement destinée à un mécanisme d'apport de mèche (1004) ; dans lequel le système de commande (512) détermine de préférence en outre si la latence d'arrêt (544) se trouve dans l'intervalle voulu et règle un décalage d'instant d'arrêt (548), utilisé par un système de commande (512), lorsque la latence d'arrêt (544) ne se trouve pas dans l'intervalle voulu, le dispositif comprenant de préférence en outre :
un système de placement automatisé de fibres (510) à commande numérique, qui est commandé par le système de commande (512) compte tenu de réglages réalisés sur le décalage d'instant de démarrage (546) et le décalage d'instant d'arrêt (548).
